Europäisches Patentamt

European Patent Office

Office européen des brevets

(19)

(11) Publication number: **0 007 671**
**B1**

(12) **EUROPEAN PATENT SPECIFICATION**

(45) Date of publication of patent specification: **23.11.83**

(51) Int. Cl.³: **H 04 N 9/28, H 04 N 3/22**

(21) Application number: **79200403.8**

(22) Date of filing: **17.07.79**

(54) Colour television display device comprising a deflection coil unit provided with a deflection coil for the vertical deflection and deflection coil unit for such a display device.

(30) Priority: **31.07.78 NL 7808044**

(43) Date of publication of application:
**06.02.80 Bulletin 80/3**

(45) Publication of the grant of the patent:
**23.11.83 Bulletin 83/47**

(84) Designated Contracting States:
**BE DE FR GB IT NL SE**

(56) References cited:
**DE - A - 2 127 366**

(73) Proprietor: **N.V. Philips' Gloeilampenfabrieken**
**Groenewoudseweg 1**
**NL-5621 BA Eindhoven (NL)**

(72) Inventor: **Gerritsen, Jan c/o.**
**INTERNAT. OCTROOIBUREAU B.V. Prof.**
**Holstlaan 6**
**NL-5656 AA Eindhoven (NL)**

(74) Representative: **Minczeles, Roger et al,**
**INTERNATIONAAL OCTROOIBUREAU B.V. Prof.**
**Holstlaan 6**
**NL-5656 AA Eindhoven (NL)**

Courier Press, Leamington Spa, England.

# Colour television display device comprising a deflection coil unit provided with a deflection coil for the vertical deflection and deflection coil unit for such a display device.

The invention relates to a colour television display device comprising a colour picture display tube and a deflection coil unit provided with a deflection coil for deflecting into the vertical direction the electron beams generated in the display tube, the coil being divided into two series-interconnected coil halves and being connected to a deflection current generator for generating a sawtooth deflection current which flows, in operation, through the deflection coil halves and having a trace and a retrace, which deflection current reverses its direction at approximately the centre instant of the trace period, circuit means provided in parallel with said deflection coil halves for causing a correction current to flow through said deflection coil halves, said circuit means comprising an adjustable balancing resistor and unidirectional current conducting elements, said unidirectional elements being arranged in series with the balancing resistor and being conductive before the centre instant of the trace period of the deflection current, each unidirectional element having a threshold voltage in its conducting direction below which it does not conduct such that said correction current is substantially zero at and about said centre instant.

Such a device by means of which convergence errors into the vertical direction can be corrected is disclosed in DE—A 2 127 366. By means of the correction current an asymmetry between the magnetic deflection fields generated by the coil halves can be eliminated. In the centre of the display screen of the picture display tube where the deflection currents are aubstantially zero there is a proper registration of coloured horizontal lines so that a correction is not necessary. However, at the top and at the bottom of the screen such lines would not be in registration. The asymmetry thus corrected can be caused by an irregularity in the construction of the tube, particularly in the electron gun(s) thereof, and/or in the deflection coil unit, by a deviation in the correction position of this unit, etc.

The correction current thus produced is a differential current, i.e. a sawtooth current is subtracted in one coil half from the deflection current flowing therethrough, whereas in the other coil half it is added to the deflection current flowing therethrough, these two deflection currents being equal, and it generates a four-pole field which is superimposed on the deflection fields. The strength thereof can be adjusted separately for the upper and the lower part of the picture, i.e. for the first and the second half of the trace period, respectively, because some unidirectional current conducting elements are conductive in a part of the trace period in which the correction current flows in a given direction, whereas some other unidirectional elements are conductive in the other part of the trace period in which the correction current flows in the opposite direction.

However it appears that the presence of the balancing resistor may have an adverse effect on the convergence, so that, for example, a vertical convergence error is visible in the centre of the display screen while the place where no error can be observed is not located in the centre but somewhat higher. This error is due to the non-zero inductance of the deflection coil, as will be explained, and it does not only indicate an error in the static convergence but also an asymmetry in the operation of the resistor between the top and the bottom of the displayed picture. The static convergence error could be compensated for by means of static correction means but this requires a laborious and time-consuming adjustment of the static convergence. Furthermore, there are colour picture display tubes whereby such correction means are completely missing.

It is an object of the invention to provide simple and inexpensive means with which the known, simple correction method for correcting the asymmetry in the deflection fields can be maintained while the above-mentioned error does substantially not occur and, to this end, the colour television display device according to the invention is characterised in that substantially constant voltage drop elements are also arranged in series with the balancing resistor and in parallel with the unidirectional current conducting elements and are such that the voltage drop caused, in operation, by the constant voltage drop elements during the trace period is higher after the centre instant thereof than that caused by the unidirectional current conducting elements before said centre instant.

Preferably, the device according to the invention can be characterised in that each substantially constant voltage drop element is formed by the series arrangement of a plurality of diodes poled for conduction in their pass direction after the centre instant of the trace period. Alternatively, each substantially constant voltage drop element may be formed by a voltage-dependent resistor.

The invention also relates to a device characterised in that each parallel circuit of unidirectional current conducting elements and substantially constant voltage drop elements is formed by a single zener diode.

The invention also relates to a deflection coil unit for use in a colour television display device as characterised above.

The invention will be further explained by way of non-limitative example with reference to the accompanying Figures, wherein

Figure 1 shows a known circuit for the vertical deflection,

Figure 2 illustrates the production of the convergence error to be corrected in the circuit of Figure 1,

Figure 3 shows an embodiment of a circuit in the device according to the invention,

Figure 4 shows a current shape produced in the circuit of Figure 1 and a current shape produced in the circuit of Figure 3, and

Figures 5 and 6 show further embodiments of the circuit in the device according to the invention.

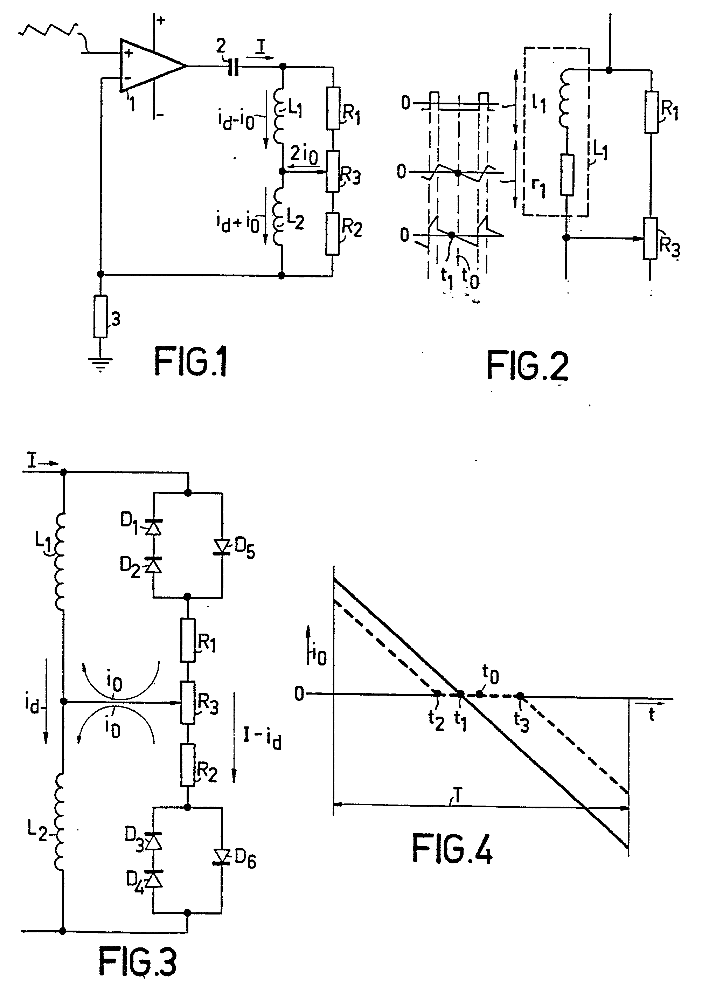

In Figure 1 reference numeral 1 denotes a power amplifier which produces a deflection current for the vertical deflection in a colour television receiver, not shown. Applied to a noninverting input terminal thereof is a sawtooth signal coming from a sawtooth generator, not shown, and having the field frequency of 50 or 60 Hz. The series arrangement of two deflection coil halves $L_1$ and $L_2$ is connected to the output terminal of amplifier 1 through isolating capacitor 2. Coil halves $L_1$ and $L_2$ are provided around a core of magnetic material which is disposed around the neck of a colour television display tube, not shown, for deflecting the electron beams generated in the tube. This core also accommodates the deflection coil for the horizontal deflection, which coil and also the other sections of the receiver will not be discussed here. The terminal of coil half $L_2$ which is not connected to coil half $L_1$ is connected to a negative feedback resistor 3 and the junction thus formed is connected to an inverting terminal of amplifier 1. Parallel with the series arrangement of coil halves $L_1$ and $L_2$ there is the series arrangement of a limiting resistor $R_1$, a trimming potentiometer $R_3$ and a limiting resistor $R_2$, the wiper of potentiometer $R_3$ being connected to the junction of coil halves $L_1$ and $L_2$. The circuit of Figure 1 is of a known type.

During operation a current I originating from amplifier 1 and being of substantially the same shape as the input signal of amplifier 1 due to the action of the negative feedback, flows to the junction of coil half $L_1$ and resistor $R_1$. During the longer portion of the field cycle, the so-called trace period in which the sawtooth varies from a maximum value in one polarity to a maximum value in the other polarity, these maxima having substantially the same absolute values, the current I varies in a substantially linear manner.

An asymmetry in the magnetic deflection field generated by coil halves $L_1$ and $L_2$ does not exercise any influence at the centre instant of the trace period, the current I being substantially zero at this instant. In contrast therewith the asymmetry at the beginning and at the end of the trace period produces a convergence error. Coloured horizontal lines will then not be in register. A red line is, for example, displayed above a blue line at the top of the display screen, whereas the reverse occurs at the bottom of the screen. This error can be corrected for by means of the setting of potentiometer $R_3$. The currents flowing through coil halves $L_1$ and $L_2$ can be adjusted by means of this potentiometer so that the asymmetry in the fields is eliminated. A current $2i_0$ flows between the wiper of potentiometer $R_3$ and the junction of coil halves $L_1$ and $L_2$, whereas a current $i_d - i_0$ flows through coil half $L_1$ and a current $i_d + i_0$ flows through coil half $L_2$. Because of the low frequency, coil halves $L_1$ and $L_2$ behave predominantly as ohmic resistors so that said currents are subjected to a variation having substantially the same shape as that of current I. Current $i_d$ generates the vertical deflection field, whereas current $i_0$ generates the correction four-pole field. The resistance branch $R_1$, $R_3$, $R_2$ has also for its object to damp oscillations which might be produced with parasitic capacitances.

However, it has appeared that the presence of this resistive branch can affect the convergence adversely, namely to produce a vertical convergence error displayed in the centre of the display screen. The place where no error can be observed is not the central horizontal line but is located above the line. The invention is based on the recognition that this error is due to the fact that the inductance of the deflection coil halves is not negligibly small. This will be explained with reference to Figure 2, the upper half of the network formed by elements $L_1$, $L_2$, $R_1$, $R_3$ and $R_2$ being considered in this Figure.

Coil half $L_1$ can be regarded as the series arrangement of pure inductance $l_1$ and ohmic resistance $r_1$. The sawtooth current flowing through inductance $l_1$ produces thereacross a pulse-shaped voltage, whose average value is zero. The current produces across resistance $r_1$ a sawtooth voltage, which assumes the value zero at the centre instant $t_0$ of the trace period. Because said sawtooth decreases in this example during the trace period, the substantially constant value of the voltage across inductance $l_1$ is negative during this period.

Figure 2 shows the sum of the pulse shape and the sawtooth, this being the voltage present across coil half $L_1$ and, consequently, also across resistor $R_1$ and the portion of potentiometer $R_3$ between the wiper thereof and resistor $R_1$. The current flowing through the resistors has approximately the same shape as this voltage since the current is almost exclusively determined by these resistors which are of a much higher value than resistance $r_1$. Because also coil half $L_2$ can be assumed to be the series arrangement of pure inductance and ohmic resistance, differential current $i_0$ comprises a direct current component which generates a static four-pole field which influences the convergence. From this it appears that the instant $t_1$ at which resistance branch $R_1$, $R_3$, $R_2$ does not introduce an error is located before instant $t_0$ and that an error does occur at instant $t_0$. The above also applies if the sawtooth across resistance $r_1$ increases during the trace period in which case the voltage across inductance $l_1$ is positive, so that the voltage across coil half $L_1$

becomes zero prior to instant $t_0$. In addition to said error in the static convergence an asymmetry is also caused in the operation of potentiometer $R_3$ between the top and the bottom of the displayed picture.

According to the invention the described error can be eliminated by providing a number of diodes, for example two diodes $D_1$ and $D_2$, between the terminal of resistor $R_1$ which is not connected to potentiometer $R_3$ and coil half $L_1$, while the same number of diodes $D_3$ and $D_4$ is provided between the terminal or resistor $R_2$, which is not connected to potentiometer $R_3$, and coil half $L_2$. All diodes $D_1$, $D_2$, $D_3$ and $D_4$ conduct in the direction which corresponds to the current direction through branch $R_1$, $R_2$, $R_3$ during the second half of the trace period. Figure 3 shows this arrangement. A diode $D_5$ is arranged in parallel with diodes $D_1$ and $D_2$, and a diode $D_6$ is arranged in parallel with diodes $D_3$ and $D_4$, which diodes $D_5$ and $D_6$ conduct in the opposite direction to the other diodes.

At the beginning of the trace period deflection current $i_d$ flows in the direction shown while a current $I - i_d$ flows through elements $D_5$, $R_1$, $R_3$, $R_2$ and $D_6$. Currents of the same amplitude, both denoted by $i_0$ and having, for example, the direction shown flow through the mesh formed by elements $L_1$, $D_5$, $R_1$ and the upper portion of potentiometer $R_3$ and through the mesh formed by elements $L_2$, $D_6$, $R_2$ and the lower portion of potentiometer $R_3$. The second of these currents flows through diode $D_6$ from the cathode to the anode, which cannot be objected to as the diode is kept in the conducting state by the greater current $I - i_d$. The voltage drop produced across diode $D_6$ is lower than the voltage which would be present across diodes $D_3$ and $D_4$, when conducting, so that the last-mentioned diodes remain cut-off.

In Figure 4 the variation of current $i_0$ as a function of the time during the trace period T is represented by means of a solid line for the conduit of Figure 1 and by means of a dashed line for the circuit of Figure 3, on both cases for the same position of the wiper of potentiometer $R_3$. With respect to Figure 1 the voltage drop across diodes $D_5$ and $D_6$ is subtracted in Figure 3 from the voltage otherwise available across branch $R_1$, $R_3$, $R_2$, so that current $i_0$ is smaller. Because the voltage drop across the diodes is substantially constant, being twice the anode-cathode threshold voltage v of a conducting diode, the dashed line has been drawn substantially parallel to the solid line, as current $i_0$ is of the same shape as the prevailing voltage. At an instant $t_2$ prior to instant $t_1$ the voltage across diode $D_5$ and $D_6$, respectively, becomes lower than voltage v, so that the diodes are cut off. Currents $i_0$ and $I - i_d$ become zero.

At instant $t_0$ current I and, consequently, also current $i_d$ reverse their directions, whereafter a substantially linear increase occurs. At an instant $t_3$ the voltage of diodes $D_1$ and $D_2$, and

$D_3$ and $D_4$, respectively, exceeds the value 2v. These diodes begin to conduct, current $I - i_d$ flowing through them. Equal currents flow through the mesh formed by the elements $R_1$, $D_2$, $D_1$, $L_1$ and the upper portion of potentiometer $R_3$ and through the mesh formed by the elements $R_2$, $D_3$, $D_4$, $L_2$ and the lower portion of potentiometer $R_3$. The second of these currents flowing through diode $D_3$ and $D_4$, which are kept in the conducting state by current $I - i_d$. Shortly after instant $t_3$ the dashed line in Figure 4 is substantially parallel with the solid line, separated by a space which corresponds to voltage 4v. With respect to Figure 1, the voltage across diodes $D_1$, $D_2$, $D_3$ and $D_4$ is subtracted from the voltage otherwise available across branch $R_1$, $R_3$, $R_2$.

From the preceding paragraphs it appears that current $i_0$ is zero at instant $t_0$. So the error introduced by branch $R_1$, $R_3$, $R_2$ has been eliminated. Current $i_0$ is indeed zero during the entire interval $t_2$ to $t_3$, so that any asymmetry between the field generated by coil halves $L_1$ and $L_2$ cannot be corrected during this interval, but as current $i_0$ is then low this asymmetry can only be very small. It is also apparent that, prior to instant $t_2$ and after instant $t_3$, current $i_0$ always has a value which is lower than for the case of Figure 1. Should current $i_0$ be as a consequence thereof too small for the asymmetry correction so that an accurate convergence at the top and at the bottom of the display screen appears to be impossible, then the suitable maximum value can be set for this current by a proper choice of the resistance value of branch $R_1$, $R_3$, $R_2$. For a display tube of the Philips type A66—540X and for coil halves $L_1$ and $L_2$, each having an inductance $l_1$ of approximately 5 mH and an ohmic resistance $r_1$ of approximately 3.05 $\Omega$ a value of approximately 180 $\Omega$ appeared to be a suitable value for the resistance of branch $R_1$, $R_3$, $R_2$. The maximum value of current $i_d$ at the end of the trace period was approximately 1A, while the value of the current $2i_0$ flowing through the wiper of potentiometer $R_3$ was approximately 0.04 A.

The above situation holds for a particular position of said wiper. With another position required for the correction of the asymmetry both the solid and the dashed line in Figure 4 have a different slope. In a given range for this position current $i_0$ flows in a direction which is opposite to the direction considered above. In practice the value of the d.c. voltage, assumed to be 4v in the example of Figure 3, which is subtracted from the voltage across branch $R_1$, $R_3$, $R_2$ will be chosen so that it will be slightly higher than the voltage present accross inductance $l_1$ during the trace period so that current $i_0$ will surely be zero at instant $t_0$, while interval $t_0$ to $t_3$ remains as short as possible. Interval $t_2$ to $t_0$ can be shortened by using, for example, germanium diodes as the diodes $D_5$ and $D_6$, these germanium type diodes having a lower, for example 0.2V, anode-cathode threshold voltage v than the types such as, for example, silicon diodes for which v is approximately 0.7V, which are used as the diodes $D_1$, $D_2$, $D_3$ and $D_4$.

A further improvement is obtained by replacing diodes $D_5$ and $D_6$ by the collector-emitter path of switching transistors. These transistors short-circuit the diodes $D_1$ and $D_2$, and $D_3$ and $D_4$, respectively, during the first half of the trace period whereas they are being kept in the cut-off state during the second half thereof. Suitable drive signals must then be applied to the bases of the transistors, which signals may be obtained from amplifier 1 or from the sawtooth generator preceding this amplifier. Figure 3 shows a simple circuit. Herein diodes $D_1$ and $D_2$ are shunted by the collector-emitter path of a pnp-transistor $Tr_1$, the base resistor $R_{b1}$ of which is connected to the terminal of coil half $L_2$ drawn at the bottom and diodes $D_3$ and $D_4$ are shunted by the collector-emitter path of a npn-transistor $Tr_2$, the base resistor $R_{b2}$ of which is connected to the terminal of coil half $L_1$ drawn at the top. The use of transistors ensures that the dashed line in Figure 4 substantially coincides with the solid line so that interval $t_2$, $t_0$ is reduced to interval $t_1$, $t_0$.

A further practical improvement is to choose the voltages which are subtracted from the voltage across branch $R_1$, $R_3$, $R_2$ so that the inverval $t_2$ to $t_0$ and $t_1$ to $t_0$, respectively, in which an asymmetry in the upper half of the displayed picture cannot be corrected, is approximately equal to the interval $t_0$ to $t_3$ in which an asymmetry in the lower half of the displayed picture cannot be corrected. This also ensures that the maximum values of current $i_0$ at the beginning and at the end of the trace period are equal to one another and that, consequently, the symmetry in the operation of potentiometer $R_3$ is recovered.

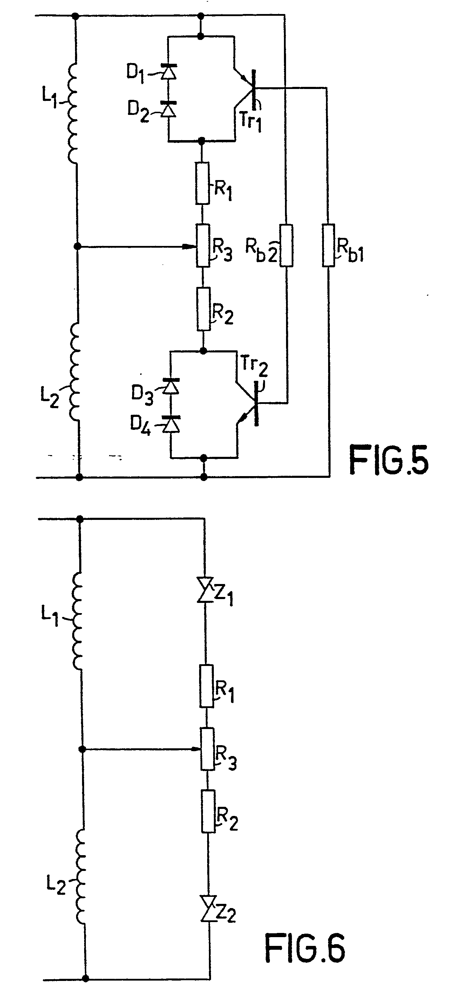

In the preceding description diodes $D_1$, $D_2$, $D_3$ and $D_4$ serve as elements across which a substantially constant voltage drop is present. It will consequently be obvious that each group of diodes can be replaced by one or more voltage-dependent resistors which are short-circuited prior to instant $t_2$ or $t_1$, respectively. Alternatively, one or more zener diodes can be used as constant voltage drop elements. Figure 6 shows such a circuit in which two zener diodes $Z_1$ and $Z_2$ are used, short-circuiting elements not being required. Prior to an instant located before instant $t_0$ current flows through $Z_1$ and $Z_2$ in the pass direction and, consequently, the voltage drop thereacross is very low. After an instant located after instant $t_0$, on the contrary, current flows through diodes $Z_1$ and $Z_2$ into the reverse direction and the voltage drop thereacross is consequently higher. So current $i_0$ is subjected to a variation in accordance with the dashed line shown in Figure 4. The drawback of a zener diode is that it is not possible to obtain any desired value for the voltage into the reverse direction, particularly for comparatively low voltages (below approximately 3V).

It will be noted that, resistive branch $R_1$, $R_3$, $R_2$ being currentless around the centre instant of the trace period, possible oscillations cannot then be damped. To enable this damping two resistors of equal values can be provided in the circuit in such a way that each resistor is in parallel with a deflection coil half. These resistors do not produce a differential current.

## Claims

1. A colour television display device comprising a colour picture display tube and a deflection coil unit provided with a deflection coil for deflecting into the vertical direction the electron beams generated in the display tube, the coil being divided into two series-interconnected coil halves ($L_1$; $L_2$) and being connected to a deflection current generator for generating a sawtooth deflection current which flows, in operation, through the deflection coil halves ($L_1$; $L_2$) and having a trace and a retrace, which deflection current reverses its direction at approximately the centre instant ($t_0$) of the trace period, circuit means provided in parallel with said deflection coil halves ($L_1$; $L_2$) for causing a correction current to flow through said deflection coil halves, said circuit means comprising an adjustable balancing resistor ($R_3$) and unidirectional current conducting elements ($D_5$; $D_6$), said unidirectional elements being arranged in series with the balancing resistor ($R_3$) and being conductive before the centre instant ($t_0$) of the trace period of the deflection current ($i_d$), each unidirectional element having a threshold voltage in its conducting direction below which it does not conduct such that said correction current is substantially zero at and about said centre instant ($t_0$), characterised in that substantially constant voltage drop elements ($D_1$, $D_2$; $D_3$, $D_4$) are also arranged in series with the balancing resistor ($R_3$) and in parallel with the unidirectional current conducting elements ($D_5$; $D_6$) and are such that the voltage drop caused, in operation, by the constant voltage drop elements during the trace period (T) is higher after the centre instant ($t_0$) thereof than that caused by the unidirectional current conducting elements ($D_5$; $D_6$) before said centre instant ($t_0$).

2. A device as claimed in Claim 1, characterised in that each substantially constant voltage drop element is formed by the series arrangement of a plurality of diodes ($D_1$, $D_2$; $D_3$, $D_4$) poled for conduction in their pass direction after the centre instant ($t_0$) of the trace period (T).

3. A device as claimed in Claim 1, characterised in that each substantially constant voltage drop element is formed by a voltage-dependent resistor.

4. A device as claimed in Claim 1, characterised in that each parallel circuit of unidirectional current conducting elements and

9      **0 007 671**      10

substantially constant voltage drop elements is formed by a single zener diode ($Z_1$; $Z_2$).

5. A deflection coil unit for use in a colour television display device as claimed in Claim 1 or 4.

**Revendications**

1. Dispositif de reproduction d'images de télévision en couleur muni d'un tube de reproduction d'images et d'un jeu de bobines de déviation, comportant une bobine pour la déviation verticale des faisceaux électroniques engendrés dans le tube, la bobine étant divisée en deux moitiés ($L_1$, $L_2$) branchées en série et étant raccordée à un générateur de courant de déviation pour engendrer un courant de déviation en dents de scie qui, en fonctionnement, passe par les moitiés de bobine de déviation ($L_1$; $L_2$) et qui a un aller et un retour, le sens de passage dudit courant étant inversé environ à l'instant central ($t_0$) de l'aller, des moyens de circuit étant montés en parallèle avec lesdites moitiés de bobine de déviation ($L_1$, $L_2$) pour causer le passage d'un courant de correction par lesdites moitiés de bobine de déviation, lesdits moyens de circuit comportant une résistance ajustable de symétrisation ($L_3$) et des éléments unidirectionnels ($D_5$, $D_6$) de conduction de courant, lesdits éléments unidirectionnels étant disposés en série avec la résistance de symétrisation ($R_3$) et étant conducteurs avant l'instant central de l'aller du courant de déviation ($i_d$) chaque élément unidirectionnel ayant dans son sens de conduction une tension de seuil au-dessous de laquelle il n'est pas conducteur, de sorte que ledit courant de correction est pratiquement nul audit instant central ($t_0$) et près de celui-ci, caractérisé en ce que des éléments ($D_1$, $D_2$; $D_3$, $D_4$) à chute de tension sensiblement constante sont également montés en série avec la résistance de symétrisation ($R_3$) et en parallèle avec les éléments unidirectionnels de conduction de courant et en ce qu'ils sont tels que la chute de tension causée en fonctionnement par ces éléments à chute de tension constante durant l'aller est supérieure après l'instant central ($t_0$) de l'aller (T) à celle causée par les éléments unidirectionnels de conduction de courant ($D_5$; $D_6$) avant ledit instant central ($t_0$).

2. Dispositif selon la revendication 1, caractérisé en ce que chaque élément à chute de tension sensiblement constante est constitué par le montage en série d'une pluralité de diodes ($D_1$, $D_2$; $D_3$, $D_4$) connectées de façon à être conductrices dans leur sens passant après l'instant central ($t_0$) de l'aller (T).

3. Dispositif selon la revendication 1, caractérisé en ce que chaque élément à chute de tension sensiblement constante est constitué par une résistance dépendante de la tension.

4. Dispositif selon la revendication 2, caractérisé en ce que chaque montage en parallèle d'éléments unidirectionnels de conduction de courant et d'éléments de chute de tension sensiblement constante est constitué par une seule diode de Zener ($Z_1$; $Z_2$).

5. Jeu de bobines de déviation destiné à un dispositif de reproduction d'images de télévision en couleur selon la revendication 1 ou 4.

**Patentansprüche**

1. Farbfernsehwiedergabeanordnung mit einer Farbbildwiedergaberöhre und einer Ablenkspuleneinheit mit einer Ablenkspule zum Ablenken der in der Wiedergaberöhre erzeugten Elektronenstrahlen in der vertikalen Richtung, welche Spule in zwei Spulenhälften L1; L2), die miteinander in Reihe verbunden sind, aufgeteilt und an einen Ablenkstromgenerator angeschlossen ist zum Erzeugen eines im Betrieb durch die Ablenkspulenhälften (L1; L2) fliessenden sägezahnförmigen Ablenkstromes, der einen Hinlauf und einem Rücklauf aufweist und etwa zu dem Mittenzeitpunkt ($t_0$) der Hinlaufzeit seine Richtung umkehrt, weiter mit einer Schaltungsanordnung parallel zu den Ablenkspulenhälften (L1; L2) zum Erzeugen eines Korrekturstromes durch die Ablenkspulenhälften, wobei die Schaltungsanordnung einen einstellbaren Symmetrierwiderstand ($R_3$) und in nur einer Richtung stromleitende Elemente (D5; D6) enthält, wobei die in einer Richtung stromleitenden Elemente in Reihe mit dem Symmetrierwiderstand ($R_3$) angeordnet sind und vor dem Mittenzeitpunkt ($t_0$) der Hinlaufzeit des Ablenkstromes ($i_d$) leitend sind, wobei jedes in einer Richtung stromleitende Element eine Schwellenspannung in der Leitungsrichtung hat, unter der das Element nicht leitend sit, so dass der genannte Korrekturstrom zu dem genannten Mittenzeitpunkt ($t_0$) und um denselben herum wenigstens nahezu Null ist, dadurch gekennzeichnet, dass Elemente mit wenigstens nahezu konstantem Spannungsabfall ($D_1$, $D_2$; $D_3$, $D_4$) ebenfalls in Reihe mit dem Symmetrierwiderstand ($R_3$) und parallel zu den in einer Richtung stromleitenden Elementen ($D_5$; $D_6$) angeordnet und derart ausgebildet sind, dass der durch die Elemente mit wenigstens nahezu konstantem Spannungsabfall während der Hinlaufzeit (T) im Betrieb verursachte Spannungsabfall nach dem Mittenzeitpunkt ($t_0$) derselben höher ist als der vor dem genannten Mittenzeitpunkt ($t_0$) durch die in einer Richtung stromleitenden Elemente ($D_5$; $D_6$) verursachte Spannungsabfall.

2. Anordnung nach Anspruch 1, dadurch gekennzeichnet, dass jedes Element mit wenigstens nahezu konstantem Spannungsabfall durch die Reihenschaltung aus einer Anzahl in der Durchlassrichtung nach dem Mittenzeitpunkt ($t_0$) der Hinlaufperiode (T) leitender Dioden ($D_1$, $D_2$; $D_3$, $D_4$) gebildet ist.

3. Anordnung nach Anspruch 1, dadurch gekennzeichnet, dass jedes Element mit wenigstens nahezu konstantem Spannungsabfall durch einen spannungabhängigen Widerstand gebildet ist.

4. Anordnung nach Anspruch 1, dadurch gekennzeichnet, dass jede Parallelschaltung von in einer Richtung stromleitenden Elementen und Elementen mit wenigstens nahezu konstantem Spannungsabfall durch eine einzige Zenerdiode $(Z_1; Z_2)$ gebildet ist.

5. Ablenkspuleneinheit zum Gebrauch in einer Farbfernsehwiedergabeanordnung nach Anspruch 1 oder 4.

FIG.1

FIG.2

FIG.3

FIG.4

FIG.5

FIG.6

2